# EUROPÄISCHE PATENTSCHRIFT

(11) **EP 0 345 718 B1**
(45) Veröffentlichungstag und Bekanntmachung des Hinweises auf die Patenterteilung: **15.12.1993**
(21) Anmeldenummer: 89110192.5
(22) Anmeldetag: 06.06.1989
(51) Int. Cl.: G03B 42/06, G01S 15/89

(54) **Unterwasser-Sichtgerät**
Underwater display unit
Visuel sous-marin

(30) Priorität: 09.06.1988 DE 3819586
(43) Veröffentlichungstag der Anmeldung: 13.12.1989
(73) Patentinhaber: Honeywell-Elac-Nautik GmbH, D-24024 Kiel (DE)
(72) Erfinder: Kamkalow, Fritz, D-2300 Kiel (DE); Seelmann, Christian, D-3209 Schellerten/Ortsteil Earmsen (DE); Edler, Norfried, D-2300 Kiel (DE)
(74) Vertreter: Rentzsch, Heinz, Dipl.-Ing.

(56) Entgegenhaltungen:
- DE-C- 1 053 982
- GB-A- 1 446 022
- US-A- 2 906 187
- US-A- 3 820 062
- US-A- 4 686 532

## Beschreibung

Es ist bekannt, für Unterwasseraufnahmen Fernsehkameras einzusetzen, welche üblicherweise einen das aufgenommene Bild wiedergebenden Monitor-Bildschirm aufweisen. Für Fernsehaufnahmen ist eine relativ starke Beleuchtung der aufzunehmenden Szene erforderlich, so daß Aufnahmen in trüben Gewässern kaum möglich sind und Fernsehaufnahmen auch dann ausscheiden, wenn die Verwendung zusätzlicher Lichtquellen unzulässig ist.

Aus US-A-29 06 187 ist eine Unterwasser-Filmkamera bekannt, an deren quaderförmigem Gehäuse auf beiden Seiten je ein Haltegriff angebracht ist. In unmittelbarer Nähe hiervon sind am Kameragehäuse die Bedienelemente für die Kamera vorgesehen. Auch eine Filmkamera benötigt üblicherweise eine zusätzliche Beleuchtung der Szene.

Weiterhin sind Sonargeräte bekannt, welche die in ihrem Sichtwinkel liegende Szene mit Ultraschallimpulsen abtasten und die Echosignale entweder auf einem Papierstreifen aufzeichnen oder auf einem Bildschirm anzeigen. Das Sonargerät enthält hierzu elektroakustische Wandler zur Erzeugung und Aussendung von Ultraschall-Sendeimpulsen und zum Empfang der vom Ziel reflektierten Echoimpulse, die vom Wandler in elektrische Signale umgesetzt und nach weiterer Signalverarbeitung zur Anzeige oder Aufzeichnung gebracht werden. Die elektroakustische Wandler sind dabei entweder im Schiffsrumpf oder in einem aus dem Schiffsrumpf nach unten ausfahrbaren, schwenkbaren Wandlerträger untergebracht.

Aus GB-A-14 46 022 ist ein Unterwasser-Sichtgerät für Taucher bekannt, welches keine zusätzlichen Lichtquellen benötigt und auch in trüben Gewässern einsatzfähig ist. Es besteht aus einem im wesentlichen zylindrischen Gehäuse, auf dessen einer Stirnseite mehrere elektroakustische Sendewandler sowie eine flüssigkeitsgefüllte akustische Linse angeordnet sind. Diese akustische Linse wirft die von der Szene reflektierten Schallwellen auf eine im Gehäuseinneren vorgesehene rotierende Zeile von Empfangswandlern, welche das von der akustischen Linse erzeugte Schallwellenmuster konzentrisch abtasten und in elektrische Signale umwandeln. Diese werden dann auf dem an der gegenüberliegenden Stirnseite des Gehäuses sichtbaren Bildschirm einer Kathodenstrahlröhre wiedergegeben.

DE-C 1 053 982 zeigt ein Unterwasser-Sichtgerät gemäß Gattungsbegriff des Anspruchs 1, bei dem auf der einen Stirnseite ein elektroakustischer Sende/Empfangswandler und auf der gegenüberliegenden Stirnseite der Bildschirm einer Kathodenstrahlröhre angeordnet sind. Bei einem Ausführungsbeispiel dieses Sichtgeräts ist die Stromquelle in einer vom übrigen Gerät getrennten Kammer untergebracht, welche durch einen wasserdichten, ohne Werkzeug leicht zu öffnenden Verschluß abgeschlossen ist.

Aufgabe der Erfindung ist es, ein Unterwasser-Sichtgerät für Taucher zu schaffen, welches ähnlich leicht handhabbar ist, wie eine Unterwasser-Fernsehkamera und dessen zwar akustisch erzeugtes, aber optisch wiedergegebenes Bild der Szene einer optischen Ansicht der Szene möglichst nahekommt. Diese Aufgabe wird gelöst durch die im Anspruch 1 gekennzeichnete Erfindung. Vorteilhafte Ausgestaltungen der Erfindung ergeben sich aus den Unteransprüchen. Sie wird nachfolgend anhand eines in den Zeichnungen wiedergebenen Ausführungsbeispiels erläutert.

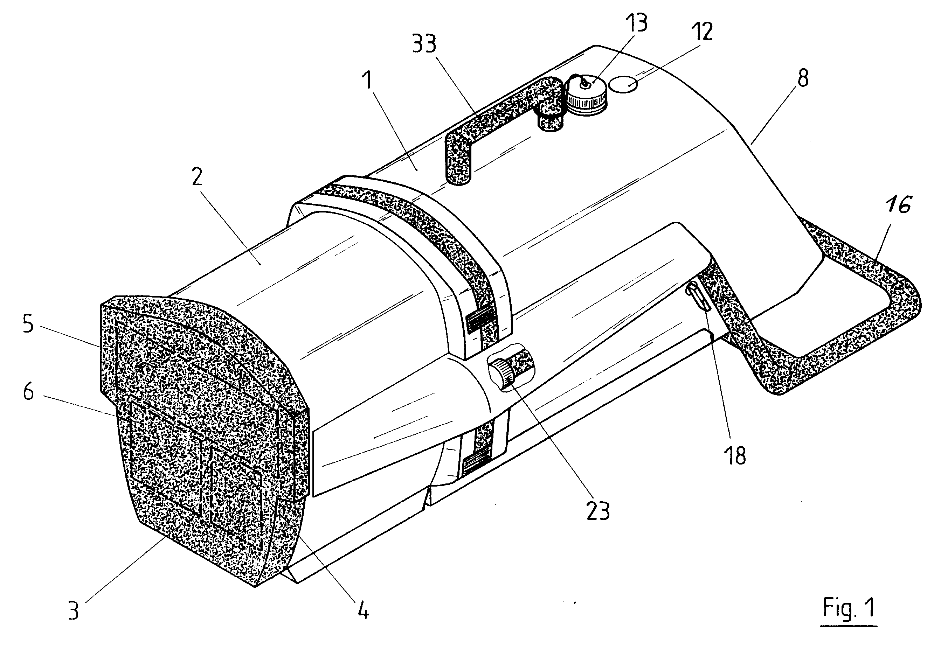

Dabei zeigt
- Fig. 1: das Sichtgerät in perspektivischer Darstellung;

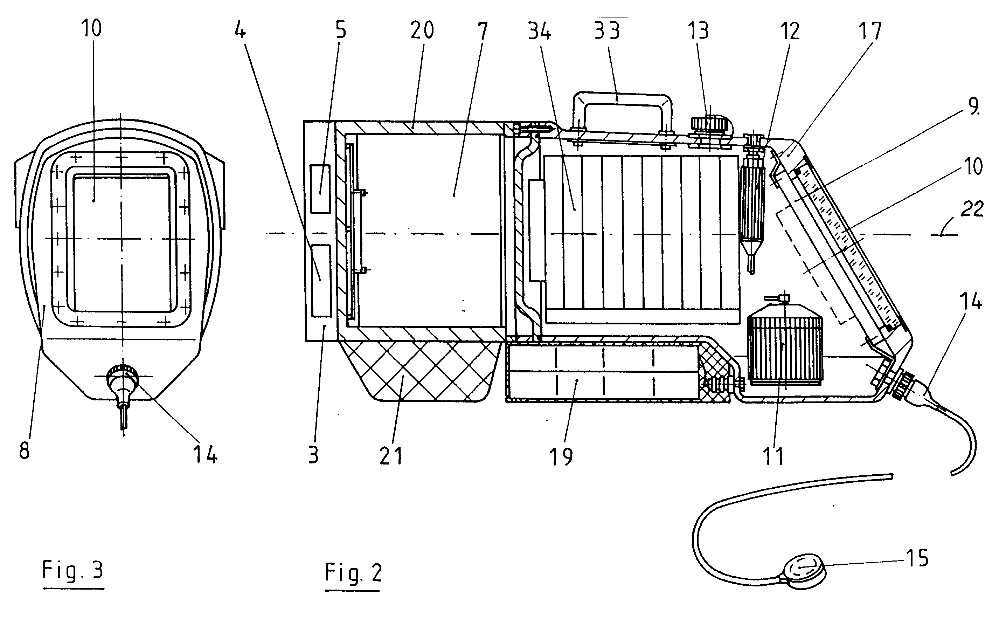

- Fig. 2: einen Längsschnitt durch das Sichtgerät;
- Fig. 3: eine Ansicht der Bedienungsseite des Sichtgeräts; und
- Fig. 4: die dort angeordnete elektrooptische Anzeigevorrichtung.

Das im wesentlichen zylindrische Gehäuse ist zweiteilig und besteht aus einer Bedien- und Anzeigeeinheit 1 sowie einer Wandlereinheit 2. Auf der der Bedien- und Anzeigeeinheit 1 abgewandten Stirnseite 3 der Wandlereinheit 2 sind ein Sendewandler 4, eine Gruppe von Empfangswandlern 5 sowie ein Horchkanalwandler 6 angeordnet. Hinter den Wandlern befindet sich eine Elektronikeinheit 7, welche die Treiberstufen für den Sendewandler sowie die Signalverarbeitungsstufen für die Empfangswandler aufweist. Der Empfangswandler besteht aus einer Vielzahl einzelner Wandlerelemente, so daß ein gebündeltes Richtdiagramm entsteht, welches über das Gesichtsfeld des Sichtgeräts schwenkbar ist.

Die Bedien- und Anzeigeeinheit 1 trägt auf der den Wandlern abgewandten Stirnseite 8 einen Elektrolumineszenzbildschirm 9, der nach außen hin durch ein Sichtfenster 10 aus PMMA Polymethylmetacrylat (Plexiglas) druckdicht abgedeckt ist. Das Sichtfenster 10 ist mit einer Antireflexbeschichtung versehen. In der Bedien- und Anzeigeeinheit 1 befinden sich ferner mehrere Leiterkarten 34 mit gedruckter Schaltung für die Erzeugung der Betriebsspannung sowie für die Signalverarbeitung und Signalauswertung der von der Wandlereinheit gelieferten elektrischen Signale. In der Bedien- und Anzeigeeinheit 1 sind ferner ein Kompaß 11 und ein Drucksensor 12 zur Messung der Tauchtiefe untergebracht. Ein durch eine wasserdichte Kappe verschlossener Diagnosestecker 13 dient zum Anschluß eine Testgerätes. über einen Kopfhörerstecker 14 kann ein beispielsweise im Helm des Tauchers untergebrachter Kopfhörer 15 angeschlossen werden, mit dem über den Horchkanalwandler 6 die Umgebung des Sichtgeräts auf etwaige Geräuschquellen abgehört werden kann. Die beiden Gehäuseteile 1 und 2 sind beide für sich druckdicht ausgebildet und können auch getrennt verwendet und zu diesem Zweck über ein Kabel miteinander verbunden werden.

Ein bügelförmiger Halte- und Richtgriff 16 ist starr mit dem Gehäuse 17 der Bedien- und Anzeigeeinheit 1 verbunden. Er trägt auf beiden Seiten je ein Bedienelement 18 in Form eines druckdichten Schalters. Eine Stromversorgungseinheit 19 in Form von mehreren Batterien oder Akkus ist ohne öffnen des Gehäuses 17 auswechselbar an diesem befestigt und hinsichtlich seiner äußeren Form in die äußere Kontur des Gesamtgehäuses 17, 20 integriert. Das Gehäuse 20 der Wandlereinheit ist durch eine Verkleidung 21 derart gestaltet, daß sich zusammen mit dem Batterieteil 19 eine stromlinienförmige Gestalt des Gesamtgehäuses 17, 20 ergibt. Um das Gehäuse im Wasser auszubalancieren, können Auftriebskörper entweder in das Gehäuse oder seine Verkleidung 21 integriert oder am Gehäuse 17, 20 zusätzlich anbringbar sein. Die Bedienelemente 18 können entweder wie dargestellt, am Halte- und Richtgriff 16 oder in dessen unmittelbarer Nähe am Gehäuseteil 17 angeordnet sein. Der Elektrolumineszenzbildschirm 9 ist gegenüber der Gehäuselängsachse 22, beispielsweise um 60° geneigt, so daß der Taucher die Anzeigeeinheit des vor ihm schwimmenden Sichtgeräts gut beobachten kann. Die Teilgehäuse 17 und 20 bestehen beispielsweise aus glasfaserverstärktem Kunststoff, in welchen metallische Halteteile für die Befestigung der Baugruppen und Bedienelemente einlaminiert sind.

Die Zweiteilung des Gehäuses in eine Wandlereinheit 2 und eine Bedien- und Anzeigeeinheit 1 ermöglicht es, die Wandlereinheit an einem besonderen Träger, beispielsweise an einer Boje oder einem absenkbaren Gestell zu befestigen und die Bedien- und Anzeigevorrichtung an Bord eines Bootes oder Schiffs zu installieren und beide Teile durch ein mehradriges Kabel miteinander zu verbinden. Zu diesem Zweck sind die beiden Einheiten 1 und 2 mit Hilfe eines übergabesteckers 23 elektrisch miteinander verbunden, so daß bei getrennter Benutzung zwischen die Steckerteile das Kabel eingesetzt wird.

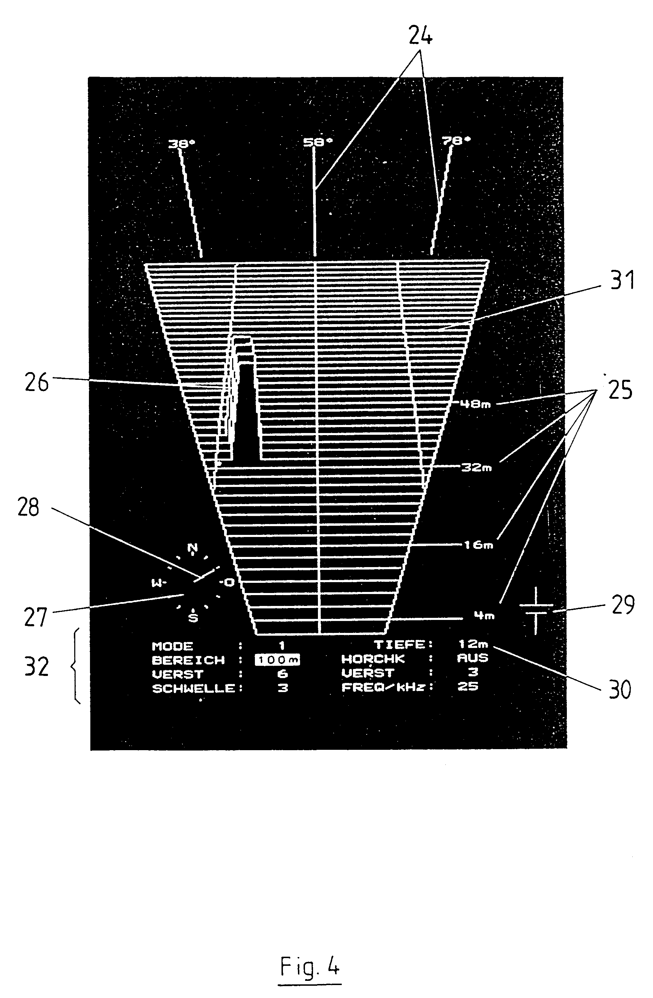

Figur 4 zeigt eine Draufsicht auf den Bildschirm. Er gibt in einer Profildarstellung den vor dem Sichtgerät liegenden Sichtbereich wieder und zwar mit zusätzlichen Marken 24 für die Winkelablage und Entfernungsmarken 25. In diesem Raster wird der Sichtbereich im Profil dargestellt, so daß sich beispielsweise ein Wrackteil 26 in räumlicher Darstellung erkennen läßt. Eine Kompaßrose 27 mit einem Zeiger 28 ist ebenso auf dem Bildschirm angeordnet wie eine Batterieerschöpfungsanzeige 29. Ferner wird in einem besonderen Feld 30 die Tauchtiefe angezeigt. Ein unterhalb der Profildarstellung 31 des Sichtbereichs befindliches Bedienfeld 32 zeigt verschiedene Kennwerte oder Parameter der gerade eingestellten Betriebsart (MODE) an, beispielsweise den Entfernungsbereich, den Verstärkungsgrad sowie einen Schwellwert der Empfangssignalstärke. Schwächere Signale, wie sie beispielsweise von vorbeischwimmenden Fischen oder Plankton herrühren, werden unterdrückt, um die bildliche Darstellung nicht zu stören. Schließlich wird angezeigt, ob der Horchkanal eingeschaltet ist und mit welcher Verstärkung er betrieben wird. Außerdem wird die Frequenz des Sende/Empfangskanals angezeigt, z. B. 25 kHz. Im gezeigten Ausführungsbeispiel sind die Winkelmarken 24 bezogen auf die Nord-Süd-Richtung. Sie könnten statt dessen auch auf die Längsachse 22 des Sichtgeräts bezogen sein. Eine Bezugnahme auf die Nord-Süd-Richtung entsprechend der Kompaßrose 27 empfiehlt sich jedoch insbesondere dann, wenn Wandlerteil 2 und Bedien- und Anzeigeteil 1 räumlich voneinander getrennt verwendet werden. Ein Elektrolumineszenzbildschirm eignet sich wegen seiner flachen Bauweise und seiner relativ niedrigen Versorgungsspannung für ein solches Sichtgerät. Ein Traggriff 33 ist oberhalb des Trägers 34 für die Leiterplatten am Gehäuse 17 der Bedien- und Anzeigeeinheit 1 befestigt.

## Patentansprüche

1. Unterwasser-Sichtgerät mit
a) einem im wesentlichen zylindrischen oder quaderförmigen Gehäuse (17, 20), auf dessen einer Stirnseite (3) ein elektroakustischer Sendewandler (4) und auf dessen gegenüberliegender Stirnseite (8) eine elektrooptische Anzeigevorrichtung mit einem Bildschirm (9) gehäusefest angeordnet sind;
b) wenigstens einem mit dem Gehäuse (17) starr verbundenen bügelförmigen Halte- und Richtgriff (16); sowie
c) einer elektroakustischen Empfangseinrichtung (5) auf der einen Stirnseite, und Auswertemitteln, um ein auf dem Bildschirm (9) der Anzeigevorrichtung wiedergegebenes Echogramm durch akustische Abtastung der Szene mit vom elektroakustischen Sendewandler (4) ausgesendeten und von der Empfangseinrichtung (5) empfangenen Schallwellen zu erzeugen;
**dadurch gekennzeichnet,** daß
d) die den Bildschirm (9) tragende Stirnseite (8) des Gehäuses (17) gegenüber der Gehäuselängsachse (22) um einen von 90° abweichenden Winkel, z.B. um 60° geneigt ist;
e) der Bildschirm (9) ein Elektrolumineszenzbildschirm ist;
f) das Echogramm (26) auf dem Bildschirm (9) in einer räumlichen Profildarstellung wiedergegeben wird; und
g) auf dem Bildschirm (9) neben der Anzeigefläche (31) für das Echogramm (26) weitere Anzeigeflächen (27, 28, 29, 32), z.B. für Tauchtiefe und Orientierung des Sichtgerätes sowie für die eingestellte Betriebsart, vorgesehen sind.

2. Sichtgerät nach Anspruch 1, **dadurch gekennzeichnet,** daß im Gehäuse (17) ein Kompaß (11) untergebracht ist.

3. Sichtgerät nach Anspruch 1 oder 2, **dadurch gekennzeichnet,** daß im Gehäuse (17) ein Tauchtiefenmesser (12) angeordnet ist.

4. Sichtgerät nach einem der Ansprüche 1 bis 3, **dadurch gekennzeichnet,** daß im Sichtgerät (17, 20) ein Horchkanalwandler (6) vorgesehen und auf der die Anzeigevorrichtung (9) tragenden Seite (8) des Gehäuses (17) ein zum Abhören von Geräuschen dienender Kopfhöreranschluß (14) vorgesehen ist.

5. Sichtgerät nach einem der Ansprüche 1 bis 4, **dadurch gekennzeichnet,** daß das Gehäuse (17, 20) geteilt ist, wobei der eine Gehäuseteil (20) die elektroakustischen Wandler und die zugehörigen elektrischen und elektronischen Schaltkreisanordnungen (7) aufnimmt, während ein zweiter Gehäuseteil (17) die Anzeigevorrichtung (9) und die Signalauswerte- und Signalaufbereitungsschaltkreise (34) der Auswertemittel enthält.

6. Sichtgerät nach Anspruch 5, **dadurch gekennzeichnet,** daß beide Gehäuseteile (17, 20) für sich druckdicht ausgebildet sind und zur getrennten Verwendung Anschlußvorrichtungen (23) für ein mehradriges Verbindungskabel aufweisen.

7. Sichtgerät nach einem der Ansprüche 1 bis 6, **dadurch gekennzeichnet,** daß das Gehäuse (17, 20) aus glasfaserverstärktem Kunststoff mit eingesetzten metallischen Halteteilen für die Baugruppen (4-7) und Träger (34) der Wandler, der Anzeigevorrichtung und der Auswertemittel besteht.

8. Sichtgerät nach einem der Ansprüche 1 bis 7, **gekennzeichnet durch** eine ohne Öffnen des Gehäuses auswechselbare, in die äußere Kontur des Gehäuses integrierte Stromversorgungseinheit (19).

9. Sichtgerät nach einem der Ansprüche 1 bis 8, **dadurch gekennzeichnet,** daß die Anzeigefläche (31) mit Leuchtmarken (24, 25) für Winkellagen und Entfernungsbereiche versehen ist.

## Claims

1. An underwater display unit comprising:
a) a housing (17, 20) of essentially cylindrical or parallelepiped shape having on its one front side (3) an electroacoustical transmitter transducer (4) and having on its opposite front side (8) an electrooptical display with a screen (9) rigidly fixed to the housing;
b) at least one holding and aiming handle (16) rigidly fixed to the housing (17); and
c) an electroacoustic receiver device (5) on the one front surface and evaluating means for generating an echo picture on the display screen (9) of the display unit by means of acoustical scanning of the scene with soundwaves transmitted by the electroacoustic transmitter transducer (4) and received by the receiver unit (5);
**characterized in that**
d) the front surface (8) of the housing (17) carrying the picture screen (9) is inclined with respect to the longitudinal axis (22) of the housing by an angle different from 90°, e.g. by 60°;
e) the picture screen (9) is an electroluminescence screen;
f) the echo picture (26) is shown on the display screen as a three-dimensional profile representation; and
g) on the display screen (9) besides the indicator surface (31) for the echo picture (27) further indicator surfaces (27, 28, 29, 32) are provided, e.g. for diving depth and the spatial orientation of the display unit and for the effective mode of operation.

2. The display unit of claim 1, **characterized in that** a compass (11) is provided within the housing.

3. The display unit according to claim 1 or 2, **characterized in that** a diving depth sensor (12) is provided in the housing.

4. The display unit according to one of the claims 1 to 3, **characterized in that** an electroacoustic listening transducer (6) is provided within the display unit (17, 20) and that an earphone connection (14) is located at the same side (8) of the housing (17) which carries the display screen (9).

5. The display unit according to one of the claims 1 to 4, **characterized in that** the housing (17, 20) is divided into two parts, wherein the one portion (20) comprises the electroacoustic transducers and the associated electrical and electronic circuits (7), whereat the second portion (17) comprises the display means (9) and the signal evaluation and signal processing circuits (34) of the evaluation means.

6. The display unit according to claim 5, **characterized in that** both portions (17, 20) of the housing are each fluid-tight and for remote use are provided with connector means (23) for a multi-wire connection cable.

7. The display unit according to one of the claims 1 to 6, **characterized in that** the housing (17, 20) is made of glass fiber enforced plastic material with metal inserts for the components (4 to 7) and the support (34) of the transducers, the display means, and the evaluation means.

8. The display unit according to one of the claims 1 to 7, **characterized by** a power supply unit (19) which can be exchanged without opening the housing and which is integrated into the outer shape of the housing.

9. The display unit according to one of the claims 1 to 8, **characterized in that** the display area (31) is provided with illuminated markings (24, 25) for indicating angular positions and distance ranges.

## Revendications

1. Appareil de visualisation sous l'eau comportant :
a) un carter (17, 20) sensiblement cylindrique ou parallélépipédique, sur un côté frontal (3) duquel un convertisseur d'émission (4) électroacoustique et, sur le côté frontal (8) opposé duquel, un dispositif d'affichage électro-optique avec un écran (9) sont agencés fixés au carter;
b) au moins une poignée de maintien et d'orientation (16) en forme d'étrier, reliée rigidement au carter (17); ainsi qu'
c) un dispositif récepteur (5) électroacoustique, disposé sur un côté frontal, et des moyens d'exploitation, pour produire sur l'écran (9) du dispositif d'affichage un échogramme restitué, par exploration acoustique de la scène, à l'aide d'ondes acoustiques émises par le convertisseur émetteur (4) électroacoustique et captées par le dispositif récepteur (5);
caractérisé en ce que
d) le côté frontal (8), portant l'écran (9), du carter (17) est inclinée d'un angle différent de 90° par rapport à l'axe longitudinal (22) du carter, par exemple d'un angle de 60°;
e) l'écran (9) est un écran à électroluminescence;
f) l'échogramme (26) est restitué sur l'écran (9) dans une représentation de profil spatiale; et
g) d'autres surfaces d'affichage (27, 28, 29, 32) sont prévues sur l'écran (9) à côté de la surface d'affichage (31) pour l'échogramme (26), par exemple pour la profondeur d'immersion et l'orientation de l'appareil de visualisation, ainsi que pour le type d'exploitation mis en service.

2. Appareil de visualisation selon la revendication 1, caractérisé en ce qu'un compas (11) est logé dans le carter (17).

3. Appareil de visualisation selon la revendication 1 ou 2, caractérisé en ce qu'un dispositif de mesure de profondeur d'immersion (12) est disposé dans le carter (17).

4. Appareil de visualisation selon l'une des revendications 1 à 3, caractérisé en ce que dans l'appareil de visualisation (17, 20) est prévu un convertisseur de canal d'écoute (6) et, sur le côté (8), portant le dispositif d'affichage (9), du carter (17), un raccordement d'écouteur (14) pour l'écoute de bruits est prévu.

5. Appareil de visualisation selon l'une des revendications 1 à 4, caractérisé en ce que le carter (17, 20) est divisé, une partie du carter (20) recevant le convertisseur électroacoustique et les agencements de circuit (7) électriques et électroniques associés, tandis qu'une deuxième partie de carter (17) contient le dispositif d'affichage (9) et les circuits d'exploitation et de préparation des signaux (34) des moyens d'exploitation.

6. Appareil de visualisation selon la revendication 5, caractérisé en ce que les deux parties de carter (17, 20) sont réalisées chacune étanche sous pression et présentent, pour l'utilisation séparée, des dispositifs de raccordement (23) pour un câble de liaison à plusieurs conducteurs.

7. Appareil de visualisation selon l'une des revendications 1 à 6, caractérisé en ce que le carter (17, 20) est réalisé en une matière synthétique renforcée par des fibres de verre, avec des parties de maintien métalliques intégrées, pour les groupes de construction (4 à 7) et les supports (34) des convertisseurs, du dispositif d'affichage et des moyens d'exploitation.

8. Appareil de visualisation selon l'une des revendications 1 à 7, caractérisé par une unité d'alimentation électrique (19) intégrée dans le profil extérieur du carter, pouvant être changée sans avoir à ouvrir le carter.

9. Appareil de visualisation selon l'une des revendications 1 à 8, caractérisé en ce que la surface d'affichage (31) est pourvue de marques lumineuses (24,25) destinées à indiquer les positions angulaires et les plages d'éloignement.
